# EUROPÄISCHE PATENTSCHRIFT

(11) **EP 1 720 741 B1**
(45) Veröffentlichungstag und Bekanntmachung des Hinweises auf die Patenterteilung: **05.11.2008**
(21) Anmeldenummer: 05850204.8
(22) Anmeldetag: 04.02.2005
(51) Int. Cl.: B60R 21/16

(54) **GASSACK ZUM EINBAU IN EIN KRAFTFAHRZEUG**
AIRBAG FOR INCLUSION IN A MOTOR VEHICLE
SAC A GAZ DESTINE A ETRE INTEGRE DANS UN VEHICULE AUTOMOBILE

(30) Priorität: 06.02.2004 DE 102004006185
(43) Veröffentlichungstag der Anmeldung: 15.11.2006
(73) Patentinhaber: Autoliv Development AB, 44783 Vargarda (SE)
(72) Erfinder: ZAURITZ, Ralf, 83607 Holzkirchen (DE); HAUSER, Stefan, 85778 Haimhausen (DE)
(74) Vertreter: Schön, Thilo
(86) Internationale Anmeldenummer: PCT/EP2005/001108
(87) Internationale Veröffentlichungsnummer: WO 2006/050757

(56) Entgegenhaltungen:
- EP-A- 1 044 855
- EP-A- 1 338 480
- DE-A1- 10 018 170
- US-A- 3 802 719
- US-A1- 2002 113 416

## Beschreibung

### Technisches Gebiet der Erfindung

Die Erfindung betrifft einen Gassack zum Einbau in ein Kraftfahrzeug nach dem Oberbegriff des Anspruchs 1.

Herkömmliche Airbags verfügen über eine oder mehrere Abströmöffnungen und werden durch eine Gasgenerator-Einheit mit einem vorgegebenen Leistungsprofil befüllt. Durch die Geometrie des Gassacks, das Leistungsprofil der Gasgenerator-Einheit und den Querschnitt der Abströmöffnung oder der Abströmöffnungen ergibt sich ein gewisser Innendruck des Gassacks im aufgeblasenen Zustand und somit seine Härte.

Idealerweise sollte die Härte eines Gassacks, insbesondere eines in einem Seitenairbagsystem eingesetzten Gassacks, auf das Körpergewicht des Insassen abgestimmt sein. Ein relativ leichter Insasse benötigt einen Gassack mit geringerer Härte, also mit geringerem Innendruck, damit die Kraft, die beim Auftreffen des betreffenden Körperteils - beispielsweise des Thorax - auf den Gassack so gering wie möglich ist. Schwerere Insassen hingegen benötigen einen Gassack mit größerem Innendruck, da sonst die Gesamtrückhaltekraft zu niedrig sein kann und die Gefahr besteht, dass der Insasse trotz Vorhandenseins des Airbags auf die Fahrzeuginnenstruktur durchschlägt.

Eine Auslegung jedes Gassacks in einem Kraftfahrzeug auf den zu schützenden Insassen ist in der Regel nicht möglich, da ein Fahrzeug zumeist von mehreren Nutzern benutzt wird. Es wäre deshalb wünschenswert, einen Gassack zur Verfügung zu haben, welcher "erkennt", ob er einen leichten oder einen schweren Insassen zu schützen hat und in der Lage ist, bedarfsweise entsprechend unterschiedliche Härten zur Verfügung zu stellen.

### Stand der Technik

Ein dem oben beschriebenen vergleichbares Problem stellt sich bei den sogenannten "out of position-Unfällen". Airbags sind in der Regel dafür ausgelegt, Insassen zu schützen, die sich in einer "normalen" Sitzposition befinden. Befindet sich der Insasse in einer untypischen Sitzposition, so kann es vorkommen, dass er sich in der Ausdehnungsrichtung des Airbags befindet, wobei es bei der explosionsartigen Ausdehnung des Airbags zu Verletzungen des Insassen kommen kann. Zur Milderung dieses Problems schlägt die DE 100 18 170 A1 einen Gassack vor, der "erkennt", ob sich der Insasse in der Ausbreitungsrichtung des Gassacks befindet, und bei dem, falls dies der Fall ist, der Entfaltungsimpuls begrenzt wird. Hierzu werden beispielsweise folgende Ausführungsformen vorgeschlagen:

In einer ersten Ausführungsform weist der Gassack zwei Kammern auf, die über eine Art Ventil miteinander verbunden sind. Diese Ventilanordnung ist derart ausgestaltet, dass das Ventil geschlossen bleibt, wenn der Gassack während des Ausdehnens auf ein Hindernis trifft. In diesem Fall wird nur eine Kammer des Gassacks befüllt, so dass sich eine verkürzte Ausdehnungsrichtung ergibt.

In einem anderen Ausführungsbeispiel weist die Außenhülle des Gassacks ein Ventil auf, welches nur dann geschlossen wird, wenn der Gassack auf kein Hindernis trifft. Trifft hingegen der Gassack auf ein Hindernis, so bleibt die Öffnung geöffnet, wodurch die Ausdehnung und der Druck im Gassack gering bleibt.

Die in der DE 100 18 170 A1 vorgeschlagenen speziellen Ausgestaltungen eines Gassacks dienen dazu, die Ausdehnung des Gassacks bei Vorhandensein eines Hindernisses zu begrenzen. Die Art des Hindernisses, also ob es sich beispielsweise um einen großen schweren oder einen kleinen leichten Insassen handelt, spielt hierbei keine Rolle. Dies ist zur Lösung der dort gestellten Aufgabe auch nicht notwendig.

Weiterhin ist aus der EP 1 044 855 ein Gassack mit den Merkmalen des Oberbegriffs des Anspruchs 1 bekannt

Ausgehend von diesem Stand der Technik ist es Aufgabe der Erfindung, einen Seitengassack zu schaffen, der in Abhängigkeit gewisser körperlicher Eigenschaften des Insassen im Bedarfsfall eine unterschiedliche Härte bereitstellt.

### Gegenstand der Erfindung

Diese Aufgabe wird durch einen Seitengassak mit den Merkmalen des Anspruchs 1 gelöst.

Als Kriterium für die unterschiedlichen Aufblaszustände des Seitengassacks wurde die Körpergröße des Insassen gewählt, da diese zumeist in enger Relation zum Gewicht des Insassen steht und vom Airbag ohne externe Hilfsmittel "erkannt" werden kann.

Der Seitengassack weist wenigstens eine Haupt- und wenigstens eine Nebenkammer auf, wobei diese Kammern über eine Verbindungsöffnung miteinander verbunden sind. In oder an der Nebenkammer ist nun eine Abströmöffnung angeordnet, durch die das Gas austritt. Der Abströmöffnung ist ein Verschlusselement zugeordnet, welches den Gasweg zur Abströmöffnung ganz oder teilweise blockiert, wenn die Nebenkammer bei ausgedehntem oder sich ausdehnendem Gassack auf ein Hindernis trifft.

Der Seitengassack ist so dimensioniert und angeordnet, dass die Hauptkammer eine Thorax-Kammer bildet und die Nebenkammer bei einem großen Insassen auf Höhe der Schulter dieses Insassen liegt, sich jedoch bei einem kleinen Insassen oberhalb der Schulter des Insassen befindet. Trifft nun ein großer Insasse auf einen solchen Gassack, wird die Abströmöffnung blockiert, wodurch sich der Druck in der Hauptkammer entsprechend erhöht. Bei einem kleinen Insassen bleibt die Abströmöffnung jedoch mit der Hauptkammer verbunden, so dass Gas aus der Hauptkammer abströmen kann, was zu der gewünschten Druckverminderung in der Hauptkammer und somit zu einem weicheren Airbag führt.

In einer bevorzugten Ausführungsform weist die Nebenkammer eine innere und eine äußere Kammer auf. Hierbei ist die äußere Kammer mit der Hauptkammer verbunden und die Nebenkammer weist eine Ventilöffnung auf, über die die äußere Kammer mit der sich an der inneren Kammer angeordneten Abströmöffnung verbunden ist. Trifft die Nebenkammer auf ein Hindernis, so wird ein Teil der Gewebelage der äußeren Kammer auf die Ventilöffnung gedrückt, und der Gasweg zwischen Hauptkammer und Abströmöffnung ist unterbrochen.

Weitere bevorzugte Ausführungsformen ergeben sich aus den weiteren Unteransprüchen sowie aus dem nun Bezug auf die Figuren näher dargestellten Ausführungsbeispiel. Es zeigen:

### Kurzbeschreibung der Zeichnungen

- Figur 1: Eine perspektivische Darstellung eines erfindungsgemäßen Gassacks,
- Figur 2: einen Schnitt durch Figur 1 entlang der Ebene A,
- Figur 3: das Detail D aus Figur 2,
- Figuren 4-7: die Wirkungsweise des erfindungsgemäßen Gassacks,
- Figur 8: ein zweites Ausführungsbeispiel eines erfindungsgemäßen Gassacks in einer Seitenansicht,
- Figur 9: einen Schnitt entlang der Ebene B-B aus Figur 8,
- Figur 10: einen Zuschnitt für die beiden außenliegenden Gewebelagen eines Gassacks nach einem dritten Ausführungsbeispiel,
- Figur 11: den Zuschnitt für die beiden inneren Gewebelagen des dritten Ausführungsbeispiels und
- Figur 12: einen Schnitt durch den Gassack des dritten Ausführungsbeispiels in einer der Figur 9 entsprechenden Schnittdarstellung.

### Beschreibung bevorzugter Ausführungsformen

### Erstes Ausführungsbeispiel

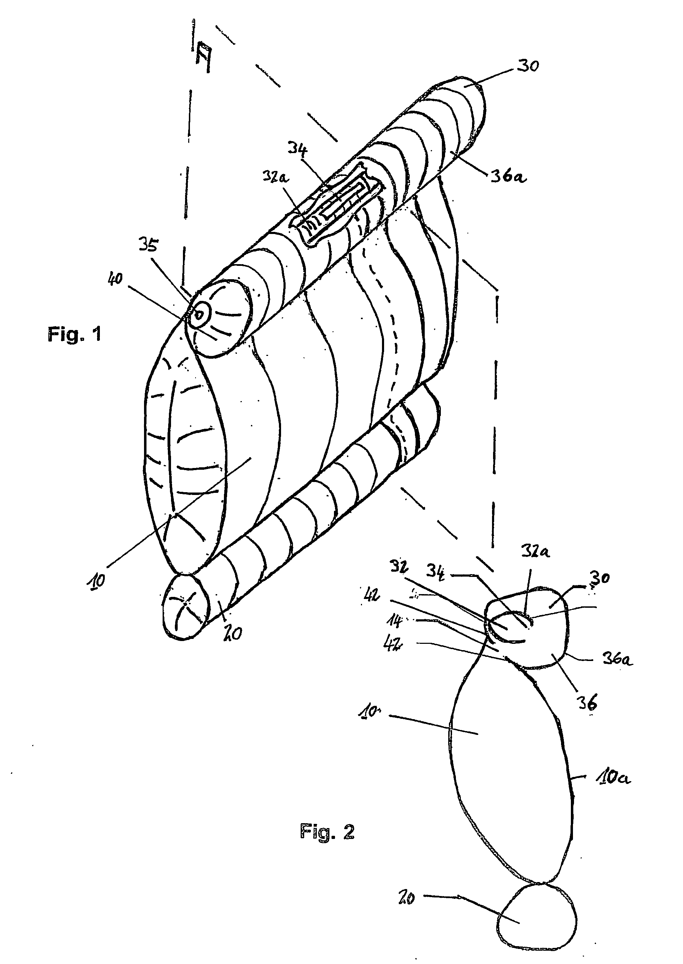

Der Aufbau des Gassacks gemäß eines ersten Ausführungsbeispiels, der hier in Form eines Seitenairbags ausgebildet ist, wird nun mit Bezug auf die Figuren 1 bis 3 erläutert. Der Airbag weist drei Kammern auf, nämlich die als Thoraxkammer ausgebildete Hauptkammer 10, die Beckenkammer 20 und die Nebenkammer 30. Hauptkammer 10 und Beckenkammer 20 dienen dem Auffangen des Insassen, während die Nebenkammer 30 in erster Linie der Druckregulierung der Hauptkammer 10 dient.

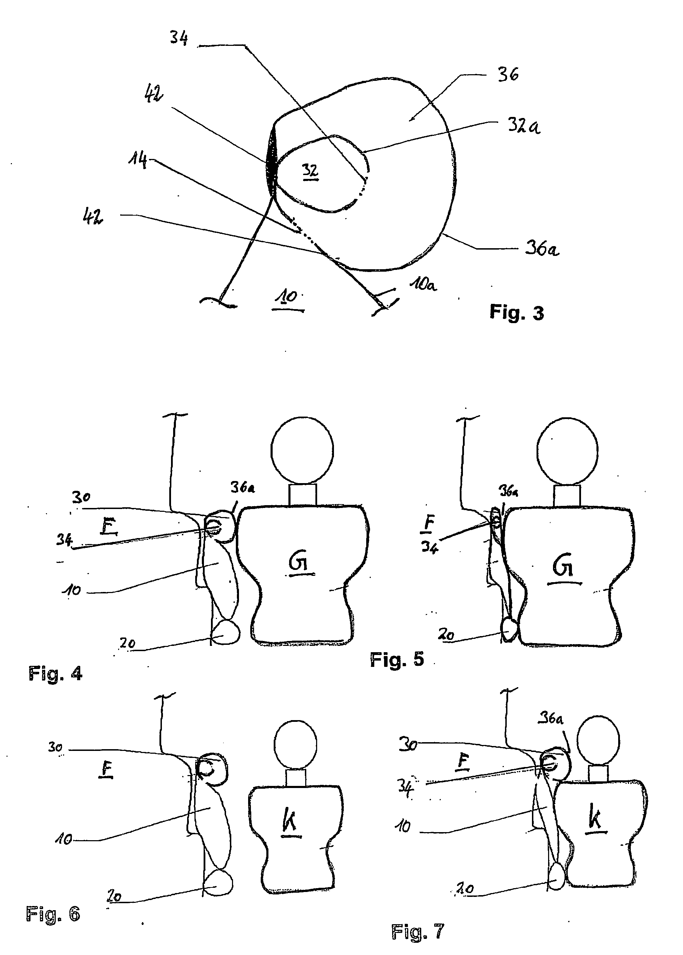

Wie man am besten anhand der Figuren 2 und 3 sieht, ist die Nebenkammer 30 über Nahtbereiche 42 an der Hauptkammer 10 angenäht. Weiterhin sind Hauptkammer 10 und Nebenkammer 30 durch eine Verbindungsöffnung 14 miteinander verbunden, so dass ein Gasaustausch zwischen Hauptkammer 10 und Nebenkammer 30 stattfinden kann.

Die Nebenkammer 30 ist wiederum selbst zweiteilig aus einer inneren Kammer 32 mit einer inneren Gewebelage 32a und einer äußeren Kammer 36 mit einer äußeren Gewebelage 36a gebildet. Die oben erwähnte Verbindungsöffnung 14 ist eine gemeinsame Öffnung der Gewebelage 10a der Hauptkammer und der äußeren Gewebelage 36a.

Die innere Kammer 32 und die äußere Kammer 36 sind jeweils im wesentlichen rohrförmig ausgebildet, wie dies am besten anhand Figur 1 zu sehen ist. Die äußere Gewebelage 36a ist hierbei in einem Bereich aufgebrochen dargestellt, damit die Lage der inneren Kammer 32 erkennbar ist. Innere Kammer 32 und äußere Kammer 36 weisen eine gemeinsame Stirnseite 40 auf, in der sich die Abströmöffnung 35 befindet, welche das Innere der inneren Kammer 32 mit der Umgebung außerhalb des Gassacks verbindet.

In der inneren Gewebelage 32a befindet sich die Ventilöffnung 34, die die innere Kammer 32 mit der äußeren Kammer 36 verbindet (siehe hierzu Figuren 1 bis 3). Kann sich der Gassack ungehindert ausdehnen (dies entspricht der in den Figuren 1 bis 3 dargestellten Situation), ist die Hauptkammer mit der Umgebung verbunden, d.h. Gas kann aus der Hauptkammer in die Umgebung ausströmen. Der Gasweg ist hierbei wie folgt: Das Gas strömt zunächst von der Hauptkammer 10 durch die Verbindungsöffnung 14 in die äußere Kammer 36, von dort durch die Ventilöffnung 34 in die innere Kammer 32 und von dort durch die Abströmöffnung 35 ins Freie. In Abhängigkeit von der Leistung des (nicht dargestellten) Gasgenerators und der gewählten Geometrie stellt sich somit ein gewisser Innendruck in der Hauptkammer 10 ein.

Ventilöffnung 34 und Verbindungsöffnung 14 können als Löcher in den jeweiligen Gewebelagen oder als gasdurchlässige Gewebebereiche ausgebildet sein.

Wird nun ein Teil der äußeren Gewebelage 36a auf die Ventilöffnung 34 gedrückt, wird diese ganz oder teilweise geschlossen, so wird der Gasfluss von der Hauptkammer 10 ins Freie gedrosselt oder vollständig unterbunden, so dass sich bei gegebener Gasgeneratorleistung ein höherer Innendruck in der Hauptkammer 10 einstellt. Ein Abschnitt der äußeren Gewebelage 36a dient bei diesem Ausführungsbeispiel also als Verschlusselement, das den Gasfluss blockiert oder drosselt.

Die Wirkungsweise eines in einem Kraftfahrzeug eingebauten erfindungsgemäßen Gassacks wird nun mit Bezug auf die Figuren 4 bis 7 erläutert, wobei mit dem Bezugszeichen F die Fahrzeuginnenseite gekennzeichnet ist.

Figur 4 zeigt den Gassack, der sich bei einem Seitencrash neben einem großen Insassen G aufbläst. Kommt es nun zu einer Relativbewegung zwischen dem großen Insassen G und dem Gassack, so kommt der Schulterbereich des großen Insassen G in Kontakt mit der Nebenkammer 30, wobei die äußere Gewebelage 36a, wie oben dargestellt, die Ventilöffnung 34 abdeckt, wodurch der Gasabfluss aus der Hauptkammer 10 gehemmt wird (s. Figur 5). Dies führt zu einem großen Innendruck und somit zu einer großen Härte der Hauptkammer, die ausreicht, um den großen und in der Regel auch schweren Insassen G abzufangen.

Die Figuren 6 und 7 zeigen die Situation bei Vorhandensein eines kleinen Insassen K. Auch hier kommt es im Fall eines Seitenaufpralls zu einer Relativbewegung zwischen dem kleinen Insassen K und dem Gassack, der Schulterbereich befindet sich jedoch unter der Nebenkammer 30, so dass die äußere Gewebelage 36a nicht auf die Ventilöffnung 34 gedrückt wird. Dies führt dazu, dass der Gasweg von der Hauptkammer 10 zur Abströmöffnung 35 frei bleibt, wodurch sich der gewünschte geringere Druck in der Hauptkammer 10 einstellt.

### Zweites Ausführungsbeispiel

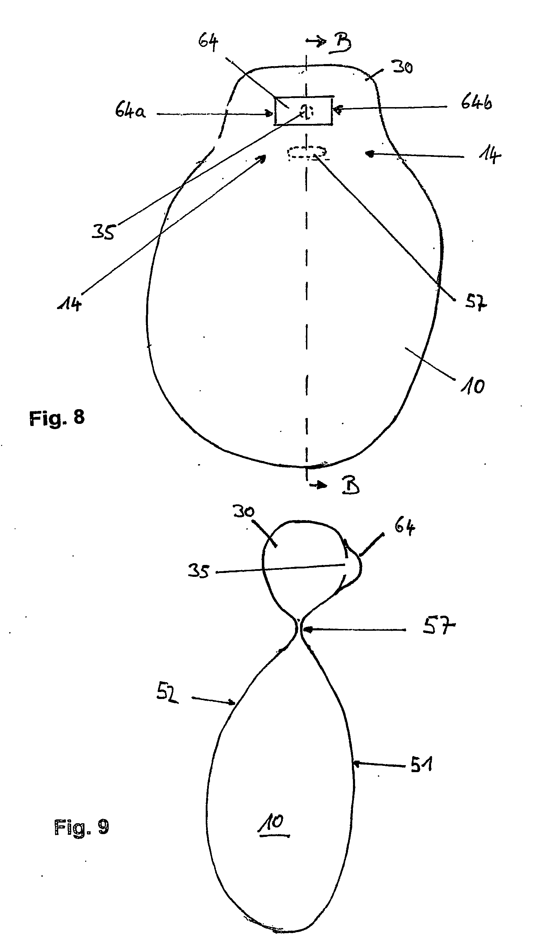

Die Figur 8 zeigt ein zweites Ausführungsbeispiel in einer seitlichen Ansicht. Dieses Ausführungsbeispiel weist eine Hauptkammer 10 und eine Nebenkammer 30, jedoch keine Beckenkammer 20 auf; eine solche kann bei einem derart ausgeführten Gassack jedoch selbstverständlich auch vorhanden sein. Hauptkammer 10 und Nebenkammer 30 werden dadurch gebildet, dass die beiden außenliegenden Gewebelagen 51,52 im Übergangsbereich zwischen Hauptkammer 10 und Nebenkammer 30 im Verbindungsbereich 57 abschnittsweise miteinander vernäht werden (siehe hierzu auch Figur 9). Es werden hierdurch zwei Verbindungsöffnungen 14 gebildet, die sich jeweils links und rechts des Verbindungsbereichs 57 befinden.

Die Abströmöffnung 35, die sich in der ersten außenliegenden Gewebelage 51 befindet, ist durch ein Abdeckgewebe 64 abgedeckt, dessen erste und zweite Seite 64a,64b nicht mit der ersten außenliegenden Gewebelage 51 vernäht sind, so dass hier von der Abströmöffnung 35 kommendes Gas ins Fahrzeuginnere austreten kann. Wird die Nebenkammer 30, beispielsweise durch die Schulter des Insassen, auf die Innenstruktur des Kraftfahrzeugs gedrückt, so wird die Abströmöffnung 35 durch das dann auf der Innenstruktur anliegende Abdeckgewebe 64 verschlossen und der Gasstrom wird gestoppt. Das Abdeckgewebe bildet also das Verschlusselement. Das Grundfunktionsprinzip ist insoweit mit demjenigen des ersten Ausführungsbeispiels identisch.

### Drittes Ausführungsbeispiel

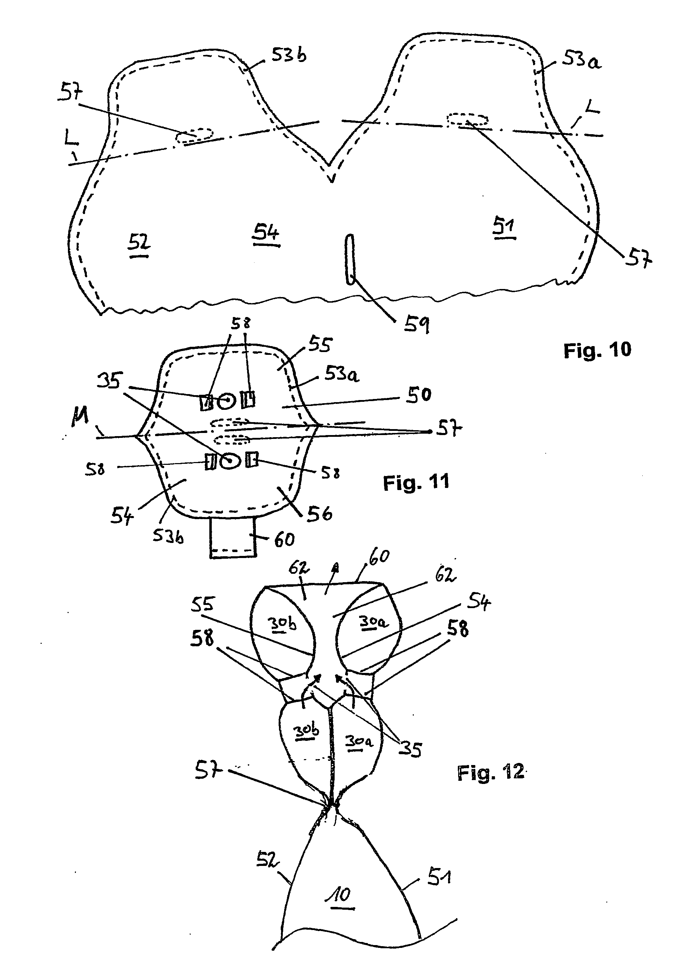

Die Figuren 10 bis 12 zeigen eine Variante des eben beschriebenen Ausführungsbeispiels. Unterschied ist hier, dass zwei Nebenkammern 30a,30b vorhanden sind. Durch die spezielle Anordnung dieser beiden Nebenkammern 30a,30b (siehe Figur 12) kann auf einfache Weise ein gutes Abströmverhalten einerseits und im Bedarfsfall ein gutes Schließverhalten der Abströmöffnungen erreicht werden. Die Hülle des Gassack wird aus nur zwei Zuschnitten gefertigt.

Figur 10 zeigt einen ersten Zuschnitt 54, aus dem beim Zusammennähen des Gassacks die erste außenliegende Gewebelage 51 und die zweite außenliegende Gewebelage 52 entstehen. Unterhalb der gestrichelten Linien L entstehen hierbei die Hauptkammer 10, oberhalb der gestrichelten Linien L die beiden Nebenkammern 30a,30b. Wie bei der eben beschriebenen Variante auch, ist ein Verbindungsbereich 57 vorgesehen. Weiterhin ist im ersten Zuschnitt 54 im Übergangsbereich zwischen erster außenliegender Gewebelage 51 und zweiter außenliegender Gewebelage 52 die Gasgeneratoröffnung 59 vorgesehen.

Figur 11 zeigt den zweiten Zuschnitt 50, aus dem die erste innenliegende Gewebelage 55 und die zweite innenliegende Gewebelage 56 gebildet werden. Weiterhin befindet sich am zweiten Zuschnitt 50 das äußere Fangband 60. Im zweiten Zuschnitt 50 befinden sich die beiden Abströmöffnungen 35, sowie vier innere Fangbänder 58, die während des Herstellungsprozesses mit der ersten außenliegenden Gewebelage 51 bzw. der zweiten außenliegenden Gewebelage 52 verbunden werden.

Das Zusammennähen der beiden Zuschnitte 50,54 erfolgt wie nun beschrieben: Der zweite Zuschnitt 50 wird entlang der Mittellinie M umgeschlagen und dann die erste innenliegende Gewebelage 55 mit der ersten außenliegenden Gewebelage 51 entlang der ersten Naht 53a und die zweite innenliegende Gewebelage 56 mit der zweiten außenliegenden Gewebelage 52 entlang der zweiten Naht 53b vernäht. Weiterhin werden die bereits mit dem zweiten Zuschnitt 50 verbundenen inneren Fangbänder 58 mit den jeweils gegenüberliegenden Bereichen der außenliegenden Gewebelagen 51,52 vernäht. Anschließend werden alle vier Gewebelagen im Verbindungsbereich 57 durch Nähen miteinander verbunden. Abschließend werden die oberen Kanten der Nebenkammern 30a,30b durch das äußere Fangband 60 miteinander verbunden. Es ergibt sich hieraus das in Figur 12 Gezeigte, welche ein Schnitt entsprechend der Darstellung der Figur 9 ist und die Situation bei vollständig expandiertem Gassack zeigt:
Im Verbindungsbereich 57 sind alle vier Gewebelagen miteinander vernäht. Unterhalb dieses Verbindungsbereichs 57 befindet sich die Hauptkammer 10, oberhalb des Verbindungsbereichs 57 befinden sich die beiden Nebenkammern 30a,30b. Die Dicke der beiden Nebenkammern wird jeweils durch zwei Fangbänder 58 begrenzt. Der Gasfluss von der Hauptkammer in die Nebenkammern erfolgt links und rechts des Verbindungsbereichs 57 (dies ist der Darstellung in Figur 12 nicht entnehmbar). Die beiden Nebenkammern 30a,30b sind an ihren oberen Enden mittels des äußeren Fangbandes 60 miteinander verbunden, so dass zwischen den beiden Nebenkammern 30a,30b ein nach oben und seitlich im wesentlichen offener Zwischenbereich 62 entsteht. Die beiden Abströmöffnungen 35 enden in diesen Zwischenbereich 62, so dass ein direktes Anströmen des Insassen oder der Seitenstruktur des Fahrzeugs vermieden wird. Ein Verschließen der Abströmöffnungen 35 erfolgt, wenn die beiden Nebenkammern 30a,30b durch ein äußeres Hindernis, beispielsweise die Schulter des Insassen, aufeinander gedrückt werden. Somit bildet die eine Nebenkammer das Verschlusselement der anderen Nebenkammer.
Bezugszeichenliste
   - 10: Hauptkammer
   - 10a: Gewebelage der Hauptkammer
   - 14: Verbindungsöffnung
   - 20: Beckenkammer
   - 30: Nebenkammer
   - 32: innere Kammer
   - 32a: innere Gewebelage
   - 34: Ventilöffnung
   - 35: Abströmöffnung
   - 36: äußere Kammer
   - 36a: äußere Gewebelage
   - 40: Stirnseite
   - 42: Nahtbereich
   - 50: zweiter Zuschnitt
   - 51: erste (außenliegende) Gewebelage
   - 52: zweite (außenliegende) Gewebelage
   - 53a: erste Naht
   - 53b: zweite Naht
   - 54: erster Zuschnitt
   - 55: erste innenliegende Gewebelage
   - 56: zweite innenliegende Gewebelage
   - 57: Verbindungsbereich
   - 58: inneres Fangband
   - 59: Gasgeneratoröffnung
   - 60: äußeres Fangband
   - 62: Zwischenbereich
   - 64: Abdeckgewebe
   - 64a: erste Seite
   - 64b: zweite Seite
   - G: großer Insasse
   - K: kleiner Insasse
   - F: Fahrzeuginnenseite

## Patentansprüche

1. Gassack zum Einbau in ein Kraftfahrzeug mit wenigstens einer Hauptkammer (10) und wenigstens einer Nebenkammer (30), wobei Hauptkammer (10) und Nebenkammer (30) über eine Verbindungsöffnung (14) miteinander verbunden sind, und einer Abströmöffnung (35), aus der Gas aus dem Gassack ausströmen kann, wobei die Abströmöffnung (35) der Nebenkammer (30) zugeordnet ist, und ein Verschlusselement vorhanden ist, das, wenn die Nebenkammer (30) bei ausgedehntem oder sich ausdehnendem Gassack auf ein Hindernis trifft, den Gasfluss durch die Abströmöffnung (35) blockiert oder drosselt,
**dadurch gekennzeichnet, dass** der Gassack als Seitenairbag ausgebildet ist, wobei die Hauptkammer (10) eine Thoraxkammer bildet und die Nebenkammer (30) im oberen Bereich der Hauptkammer angeordnet ist.

2. Gassack nach Anspruch 1, **dadurch gekennzeichnet, dass** im unteren Bereich der Hauptkammer (10) eine Beckenkammer (20) angeordnet ist.

3. Gassack nach einem der vorangehenden Ansprüche, **dadurch gekennzeichnet, dass**
- die Nebenkammer (30) eine innere Kammer (32) mit einer inneren Gewebelage (32a) und eine äußere Kammer (36) mit einer äußeren Gewebelage (36a) aufweist,
- die äußere Gewebelage (36a) abschnittsweise mit dem Gewebe (10a) der Hauptkammer (10) verbunden ist und die Verbindungsöffnung (14) zwischen der äußeren Gewebelage (36a) und dem Gewebe (10a) der Hauptkammer (10) angeordnet ist,
- die innere Gewebelage (32a) eine Ventilöffnung (34) aufweist, durch die das Gas von der äußeren Kammer (36) in die innere Kammer (32) und von dort zur Abströmöffnung (35) strömen kann.

4. Gassack nach Anspruch 3, **dadurch gekennzeichnet, dass** ein Abschnitt der äußeren Gewebelage (36a) als Verschlusselement für die Ventilöffnung (34) dient.

5. Gassack nach Anspruch 3 oder 4, **dadurch gekennzeichnet, dass** innere und äußere Gewebelage der Nebenkammer im wesentlichen rohrförmig ausgebildet sind.

6. Gassack nach einem der Ansprüche 1 bis 2, **dadurch gekennzeichnet, dass** das Verschlusselement durch ein Abdeckgewebe (64) gebildet wird.

7. Gassack nach einem der Ansprüche 1 bis 2, **dadurch gekennzeichnet, dass** zwei Nebenkammern (30a, 30b) vorhanden sind.

8. Gassack nach Anspruch 7, **dadurch gekennzeichnet, dass** jede der beiden Nebenkammern eine innenliegende Gewebelage (55,56) aufweist, wobei sich die beiden innenliegende Gewebelagen gegenüberliegen und sich in vollständig expandiertem Zustand des Gassacks zwischen den beiden innenliegenden Gewebelagen ein offener Zwischenbereich (62) befindet.

9. Gassack nach Anspruch 8, **dadurch gekennzeichnet, dass** die beiden Nebenkammern über ein äußeres Fangband (60) miteinander verbunden sind.

10. Gassack nach Anspruch 8 oder Anspruch 9, **dadurch gekennzeichnet, dass** die Abströmöffnungen (35) der beiden Nebenkammern in den Zwischenbereich (62) enden.

11. Gassack nach einem der Ansprüche 8 bis 10, **dadurch gekennzeichnet, dass** seine Hülle aus zwei Zuschnitten gefertigt ist.

12. Gassack nach einem der Ansprüche 8 bis 11, **dadurch gekennzeichnet, dass** zwei außenliegende und zwei innenliegende Gewebelagen (51,52; 55,56) vorhanden sind und dass in einem Verbindungsbereich (57) alle vier Gewebelagen miteinander verbunden sind.

## Claims

1. Airbag for installation in a motor vehicle having at least one main chamber (10) and at least one auxiliary chamber (30), whereby main chamber (10) and auxiliary chamber (30) are connected with each other by means of a connecting opening (14), and an outflow opening (35) through which gas can exhaust from the airbag, whereby the outflow opening (35) is allocated to the auxiliary chamber (30) and a closing element is present which blocks or throttles the gas flow through the outflow opening (35) when the auxiliary chamber (30) hits an obstacle if the airbag is expanded or during expansion of the airbag,
**characterised in that** the airbag is in the form of a side airbag, whereby the main chamber (10) forms a thorax chamber and the auxiliary chamber (30) is positioned in the top area of the main chamber.

2. Airbag according to Claim 1, **characterised in that** a pelvis chamber (20) is located in the lower area of main chamber (10).

3. Airbag according to any of the previous claims, **characterised in that**
- the auxiliary chamber (30) exhibits an inner chamber (32) with an inner fabric layer (32a) and an outer chamber (36) with an outer fabric layer (36a),
- the outer fabric layer (36a) is connected in sections with the fabric (10a) of the main chamber (10) and the connecting opening (14) is located between the outer fabric layer (36a) and the fabric (10a) of the main chamber (10),
- the inner fabric layer (32a) exhibits a valve opening (34), through which gas can stream from the outer chamber (36) into the inner chamber (32) and from there to the outflow opening (35).

4. Airbag according to Claim 3, **characterised in that** a section of the outer fabric layer (36a) serves as a closing element for valve opening (34).

5. Airbag according to Claim 3 or 4, **characterised in that** the inner and outer fabric layers of the auxiliary chambers are basically of tubular form.

6. Airbag according to any of Claims 1 to 2, **characterised in that** the closing element is formed by a covering fabric (64).

7. Airbag according to any of Claims 1 to 2, **characterised in that** two auxiliary chambers (30a, 30b) are present.

8. Airbag according to Claim 7, **characterised in that** each of the two auxiliary chambers exhibits an inner fabric layer (55,56), whereby the two inner fabric layers lie opposite one another and, when the airbag is fully expanded, an open intermediate area (62) is present between the two inner fabric layers.

9. Airbag according to Claim 8, **characterised in that** the two auxiliary chambers are connected with each other via an outer tether (60).

10. Airbag according to Claim 8 or Claim 9, **characterised in that** the outflow openings (35) of the two auxiliary chambers end in the intermediate area (62).

11. Airbag according to any of Claims 8 to 10, **characterised in that** its skin is manufactured of two cuttings.

12. Airbag according to any of Claims 8 to 11, **characterised in that** two outer and two inner fabric layers (51,52; 55,56) are present and that all four fabric layers are joined to each other in a connection area (57).

## Revendications

1. Sac à gaz destiné à être intégré dans un véhicule automobile avec au moins une chambre principale (10) et au moins une chambre secondaire (30), la chambre principale (10) et la chambre auxiliaire (30) étant reliées entre elles par le biais d'une ouverture de liaison (14), et une ouverture de flux sortant (35), de laquelle du gaz peut sortir du sac à gaz, l'ouverture de flux sortant (35) étant associée à la chambre secondaire (30), et un élément de fermeture étant présent, lequel, lorsque la chambre secondaire (30) rencontre un obstacle quand le sac à gaz est gonflé ou se gonfle, bloque ou étrangle le flux de gaz au travers de l'ouverture de flux sortant (35), **caractérisé en ce que** le sac à gaz est réalisé comme un coussin gonflable latéral, la chambre principale (10) formant une chambre pour le thorax et la chambre secondaire (30) étant disposée dans la zone supérieure de la chambre principale.

2. Sac à gaz selon la revendication 1, **caractérisé en ce qu'**une chambre réservoir (20) est disposée dans la zone inférieure de la chambre principale (10).

3. Sac à gaz selon l'une quelconque des revendications précédentes, **caractérisé en ce que**
◆ la chambre secondaire (30) présente une chambre (32) intérieure avec une couche de tissu (32a) intérieure et une chambre (36) extérieure avec une couche de tissu (36a) extérieure,
◆ la couche de tissu (36a) extérieure est reliée par endroits au tissu (10a) de la chambre principale et l'ouverture de liaison (14) est disposée entre la couche de tissu (36a) extérieure et le tissu (10a) de la chambre principale (10),
◆ la couche de tissu (32a) intérieure présente une ouverture de soupape (34), par laquelle le gaz peut passer de la chambre (36) extérieure à la chambre (32) intérieure et de là vers l'ouverture de flux sortant (35).

4. Sac à gaz selon la revendication 3, **caractérisé en ce qu'**une section de la couche de tissu (36a) extérieure sert d'élément de fermeture pour l'ouverture de soupape (34).

5. Sac à gaz selon la revendication 3 ou 4,
**caractérisé en ce que** les couches de tissu intérieure et extérieure de la chambre secondaire sont réalisées essentiellement en forme de tube.

6. Sac à gaz selon l'une quelconque des revendications 1 à 2, **caractérisé en ce que** l'élément de fermeture est formé par un tissu de recouvrement (64).

7. Sac à gaz selon l'une quelconque des revendications 1 à 2, **caractérisé en ce que** deux chambres secondaires (30a, 30b) sont présentes.

8. Sac à gaz selon la revendication 7, **caractérisé en ce que** chacune des deux chambres secondaires présente une couche de tissu (55, 56) intérieure, les deux couches de tissu intérieures se faisant face et une zone intermédiaire (62) ouverte se trouvant à l'état complètement détendu du sac à gaz entre les deux couches de tissu intérieures.

9. Sac à gaz selon la revendication 8, **caractérisé en ce que** les deux chambres secondaires sont reliées entre elles par le biais d'une bande de garde (60) extérieure.

10. Sac à gaz selon la revendication 8 ou 9,
**caractérisé en ce que** les ouvertures de flux sortant (35) des deux chambres secondaires se terminent dans la zone intermédiaire (62).

11. Sac à gaz selon l'une quelconque des revendications 8 à 10, **caractérisé en ce que** son enveloppe est constituée de deux pièces découpées.

12. Sac à gaz selon l'une quelconque des revendications 8 à 11, **caractérisé en ce que** deux couches de tissu (51, 52 ; 55, 56) extérieures et intérieures sont présentes et **en ce que** les quatre couches de tissu sont reliées entre elles dans une zone de liaison (57).
